# FASCICULE DE BREVET EUROPEEN

(11) **EP 2 961 573 B1**
(45) Date de publication et mention de la délivrance du brevet: **19.10.2016**
(21) Numéro de dépôt: 14713187.4
(22) Date de dépôt: 26.02.2014
(51) Int. Cl.: B25B 27/06, F01D 25/16, F01D 25/28, F16C 41/04

(54) **OUTIL, PROCÉDÉ ET KIT DE MONTAGE D'UNE BAGUE INTERIEURE DE ROULEMENT PORTANT UNE CAGE DE ROULEMENT ET DES VIS DE MAINTIEN DANS UNE TURBOMACHINE**
GERÄT, VERFAHREN UND KIT FÜR DIE MONTAGE EINES INNENRINGS EINES ROLLENLAGERS MIT EINEM WÄLZLAGERKÄFIG UND SCHRAUBEN IN EINER TURBOMASCHINE,
TOOL, METHOD AND KIT FOR MOUNTING IN A TURBOMACHINE AN INNER RACE OF A ROLLER BEARING WHICH HAS A ROLLER BEARING CAGE AND RETAINING BOLTS

(30) Priorité: 28.02.2013 FR 1351820
(43) Date de publication de la demande: 06.01.2016
(73) Titulaire: Safran Aircraft Engines, 75015 Paris (FR)
(72) Inventeur: GUERIN, Jacques, Georges, Philippe, F-77550 Moissy-Cramayel cedex (FR); PIGEON, Mathieu, F-77550 Moissy-Cramayel cedex (FR)
(74) Mandataire: Gevers & Orès
(86) Numéro de dépôt international: PCT/FR2014/050411
(87) Numéro de publication internationale: WO 2014/131989

(56) Documents cités:
- EP-A1- 1 462 220
- FR-A1- 2 949 138
- US-A- 1 406 824

## Description

### DOMAINE TECHNIQUE

La présente invention concerne un outil de montage d'un ensemble comportant une bague intérieure de roulement, une cage de roulement et des vis de maintien dans une turbomachine, selon le préambule de la revendication 1, un procédé de montange d'un tel ensemble selon le préambule de la revenducation 9 et un kit Selon le préambule de la revenducation 10. Un tel outil, un tel procédé et un tel kit sont connus du document EP 1 462 220A.

### ETAT DE L'ART

Dans la technique actuelle, un ensemble du type précité est monté sur un arbre de turbomachine au moyen d'un outil spécifique. La bague intérieure de roulement d'un palier de turbomachine peut comprendre une partie d'extrémité amont comportant des léchettes annulaires externes d'un joint d'étanchéité à labyrinthe, une partie médiane définissant un chemin de roulement pour des éléments roulants (billes, rouleaux, aiguilles, etc.), en particulier des galets et une cage de maintien de ces galets, et à son extrémité aval une bride annulaire externe de fixation à un arbre de turbine de la turbomachine, cette bride comportant une rangée annulaire d'orifices de passage de vis dont les têtes prennent appui sur la face annulaire amont de la bride.

Les outils de la technique actuelle ne sont pas entièrement satisfaisants, en particulier car ils ne protègent pas suffisamment ou efficacement la bague, la cage et les galets du roulement, qui peuvent donc être endommagés lors de l'utilisation de l'outil et du montage de la bague sur l'arbre de turbomachine, ce qui peut avoir pour conséquence la casse du roulement et la dépose prématurée du moteur. De plus, les outils actuellement utilisés sont relativement lourds, encombrants et complexes à utiliser, et ne sont pas toujours conçus pour éviter des erreurs humaines de mauvaise utilisation.

Enfin, un outil de la technique actuelle est en général conçu pour monter une bague sur une seule configuration d'assemblage du moteur et un autre outil doit être utilisé pour monter une bague identique sur une autre configuration d'assemblage du moteur. C'est par exemple le cas du montage d'une bague intérieure de roulement sur un module mineur de moteur, qui est en général utilisé en atelier. L'outil de montage de cette bague ne peut pas être utilisé pour monter une même bague sur un module majeur du moteur, qui représente l'environnement réel de la turbomachine en maintenance.

Il y a donc un réel besoin d'un outil qui apporte une solution simple, efficace et économique à au moins une partie des problèmes précités.

### EXPOSE DE L'INVENTION

L'invention propose un outil de montage d'un ensemble comportant une bague intérieure de roulement, une cage de roulement équipée de galets et des vis de maintien dans une turbomachine selon la revendication 1, la bague comportant un chemin de roulement des galets et à son extrémité aval une bride annulaire externe comportant des orifices de passage des vis, caractérisé en ce qu'il comprend une première enveloppe cylindrique sectorisée qui est destinée à recouvrir une partie d'extrémité amont de la bague et qui comprend des moyens de retenue axiale sur la bague, une deuxième enveloppe cylindrique sectorisée qui est destinée à recouvrir la cage et les galets et au moins une partie d'extrémité aval de la première enveloppe et à venir en appui axial sur les têtes de vis de la bride, une couronne cylindrique qui est destinée à entourer au moins en partie la deuxième enveloppe et qui comprend des moyens d'appui axial vers l'aval sur cette deuxième enveloppe, et un anneau de verrouillage qui est monté sur une partie d'extrémité amont de la première enveloppe, entre la couronne et des moyens de retenue axiale de cette partie d'extrémité amont, et qui comporte des moyens d'appui axial vers l'aval sur la couronne et de serrage axial de la deuxième enveloppe entre les moyens d'appui de la couronne et les têtes de vis de la bride.

L'outil selon l'invention comprend ainsi deux enveloppes coaxiales de recouvrement et de protection (contre les chocs et les contaminations par exemple) de la partie d'extrémité amont de la bague, de la cage et des galets de roulement, respectivement, ces enveloppes étant sectorisées pour favoriser leur montage/démontage. La première enveloppe peut être retenue axialement sur la bague par coopération de formes et est retenue radialement vers l'extérieur par la deuxième enveloppe. La deuxième enveloppe est retenue radialement vers l'extérieur par la couronne et est immobilisée axialement sur la bague en étant serrée entre la couronne et les têtes de vis. La deuxième enveloppe assure ainsi le maintien des têtes de vis en appui axial sur la face annulaire amont de la bride de la bague, ce qui les empêche de se déplacer lors des opérations de montage (et en particulier de flotter dans les orifices de la bride). La deuxième enveloppe entoure de préférence avec un jeu radial les galets de la cage de façon à éviter tout risque de contact avec ces galets. La deuxième enveloppe peut comprendre des moyens d'appui radial vers l'intérieur (par rapport à l'axe longitudinal de l'outil et de la bague) sur la première enveloppe pour la maintenir plaquée contre la bague, et la couronne peut comprendre des moyens d'appui radial vers l'intérieur sur la deuxième enveloppe pour la maintenir plaquée contre la première enveloppe et la bague. Cette couronne est de préférence monobloc. L'anneau de verrouillage est retenu axialement vers l'amont par des moyens de retenue de la première enveloppe. Il comprend des moyens d'appui axial sur la couronne et de sollicitation de la couronne vers l'aval de façon à ce que la deuxième enveloppe, sur laquelle prend appui axialement vers l'aval la couronne, soit serrée axialement entre la couronne et les têtes de vis. Cet anneau de verrouillage est également de préférence monobloc.

L'outil selon l'invention ne présente pas les inconvénients des outils de la technique antérieure. Il est simple d'utilisation et relativement léger (quelques kilogrammes) et facilement manipulable par un opérateur. Il est utilisable dans tous les types de configuration de montage sur le moteur, que ce soit par exemple sur un module mineur ou un module majeur. Enfin, l'outil selon l'invention n'est pas limité à un type de roulement et peut être utilisé pour plusieurs types de bague intérieure de roulement.

Avantageusement, la première enveloppe comprend à son extrémité amont des dents de crabot destinées à coopérer avec des dents de crabot complémentaires de l'anneau de verrouillage pour, d'une part, autoriser le montage axial de l'anneau sur la partie d'extrémité amont de l'enveloppe et pour, d'autre part, retenir axialement l'anneau vers l'amont lorsque l'anneau est déplacé en rotation d'un angle prédéterminé par rapport à la première enveloppe.

La première enveloppe comprend de préférence au moins un joint annulaire élastique destiné à coopérer avec la deuxième enveloppe. Ce joint permet notamment de limiter les mouvements relatifs entre les première et deuxième enveloppes.

De préférence, la deuxième enveloppe porte à son extrémité aval un joint annulaire élastique destiné à venir en appui sur les têtes de vis. Ce joint permet notamment de compenser les différences de hauteur des têtes de vis portées par la bride, le joint étant plus ou moins contraint selon les hauteurs des têtes de vis.

Dans le cas précité où la bague intérieure de roulement comporte sur une partie d'extrémité amont des léchettes annulaires externes d'un joint d'étanchéité à labyrinthe, l'outil comprend de préférence un anneau de protection destiné à entourer ces léchettes, cet anneau étant entouré par la première enveloppe et étant bloqué axialement sur la bague par cette première enveloppe.

La première enveloppe peut comprendre une gorge annulaire orientée vers l'amont de réception d'un rebord cylindrique orienté vers l'aval de la deuxième enveloppe. Ce rebord et cette gorge forment des moyens d'accrochage et coopèrent ensemble pour retenir radialement la deuxième enveloppe vis-à-vis de la première enveloppe, avant le montage de la couronne sur la deuxième enveloppe.

La couronne peut comprendre à son extrémité amont un rebord annulaire interne destiné à être intercalé entre l'extrémité amont de la deuxième enveloppe et l'anneau de verrouillage.

L'anneau de verrouillage comprend de préférence des orifices axiaux taraudés de montage de vis dont les extrémités libres sont destinées à prendre appui axialement vers l'aval sur la couronne, le serrage des vis sollicitant la couronne vers l'aval et entraînant le serrage de la deuxième enveloppe entre la couronne et les têtes de vis.

L'anneau de verrouillage comprend de préférence des moyens de préhension de l'outil, tels que deux poignées diamétralement opposées par rapport à l'axe longitudinal de l'outil.

L'outil peut comprendre un socle de support de l'ensemble précité (bague, cage et galets de roulement et vis de maintien) et d'assemblage des différentes pièces de l'outil, ce socle comportant une surface annulaire qui est destinée à servir d'appui à la bride de la bague et qui comprend des orifices de passage des vis de cette bride. L'ensemble précité est destiné à être disposé verticalement sur le socle.

La présente invention concerne également un procédé de montage d'un ensemble comportant une bague intérieure de roulement, une cage et des galets de roulement et des vis de maintien dans une turbomachine, selon la revendication 9, au moyen d'un outil tel que décrit ci-dessus, caractérisé en ce qu'il comprend les étapes consistant à :
c) monter les secteurs de première enveloppe sur la bague,
d) monter les secteurs de deuxième enveloppe sur la bague et la première enveloppe,
e) engager la couronne sur la deuxième enveloppe,
f) engager l'anneau de verrouillage sur la première enveloppe, par exemple par une translation axiale vers la première enveloppe puis par une rotation d'un angle prédéterminé autour de l'axe longitudinal de l'outil,
g) serrer axialement la deuxième enveloppe entre la couronne et les têtes de vis,
j) engager l'outil et la bague sur un arbre de turbomachine par translation axiale depuis l'amont jusqu'à ce qu'il vienne en appui axial sur une surface annulaire de cet arbre et que les vis portées par la bride de la bague passent à travers des orifices de cette surface,
k) visser des écrous sur les extrémités libres des vis, et
l) démonter l'outil,

Le procédé peut comprendre une ou plusieurs des étapes supplémentaires suivantes :
- avant l'étape c) :
   a) disposer l'ensemble précité verticalement sur le socle de support, de sorte que les vis de la bride traversent les orifices du socle,
   b) engager l'anneau de protection sur les léchettes de la bague,
- entre les étapes g) et j) :
   h) chauffer l'ensemble précité, soit par mise au four de la bague et de l'outil et son socle, soit par induction au moyen d'un élément qui traverse axialement l'outil et la bague et qui passe à travers un orifice central du socle,
   i) retirer l'outil de son socle.

La présente invention concerne enfin un kit selon la revendication 10 pour la mise en oeuvre du procédé tel que décrit ci-dessus, caractérisé en ce qu'il comprend une mallette de rangement et de stockage des secteurs des première et deuxième enveloppes, de la couronne, de l'anneau de verrouillage, et éventuellement de l'anneau de protection, du socle de support, et d'un outil de démontage individuel des secteurs de seconde enveloppe.

### DESCRIPTION DES FIGURES

L'invention sera mieux comprise et d'autres détails, caractéristiques et avantages de l'invention apparaîtront à la lecture de la description suivante faite à titre d'exemple non limitatif en référence aux dessins annexés, dans lesquels :
- la figure 1 est une vue schématique en perspective éclatée d'un outil selon l'invention de montage d'une bague intérieure de roulement portant une cage de galets de roulement et des vis de maintien,
- les figures 2 à 10 sont des vues schématiques en perspective de l'outil de la figure 1 et représente des étapes d'assemblage de cet outil,
- la figure 11 est une vue schématique en coupe axiale de l'outil de la figure 1,
- la figure 12 est une autre vue schématique en perspective de l'outil selon l'invention et représente une variante de réalisation du socle de support,
- les figures 13 et 14 sont des vues schématiques en perspective de l'outil de la figure 1 et d'un module mineur d'arbre de turbine d'une turbomachine, et représentent des étapes de montage de la bague intérieure de roulement sur ce module,
- la figure 15 est une vue schématique en coupe axiale de l'outil et de l'arbre des figures 13 et 14,
- les figures 16 à 22 sont des vues schématiques en perspective de l'outil de la figure 1 et d'un module majeur d'arbre de turbine d'une turbomachine, et représentent des étapes de montage de la bague intérieure de roulement sur ce module et de démontage de l'outil, et
- la figure 23 est une vue schématique en perspective d'un kit selon l'invention.

### DESCRIPTION DETAILLEE

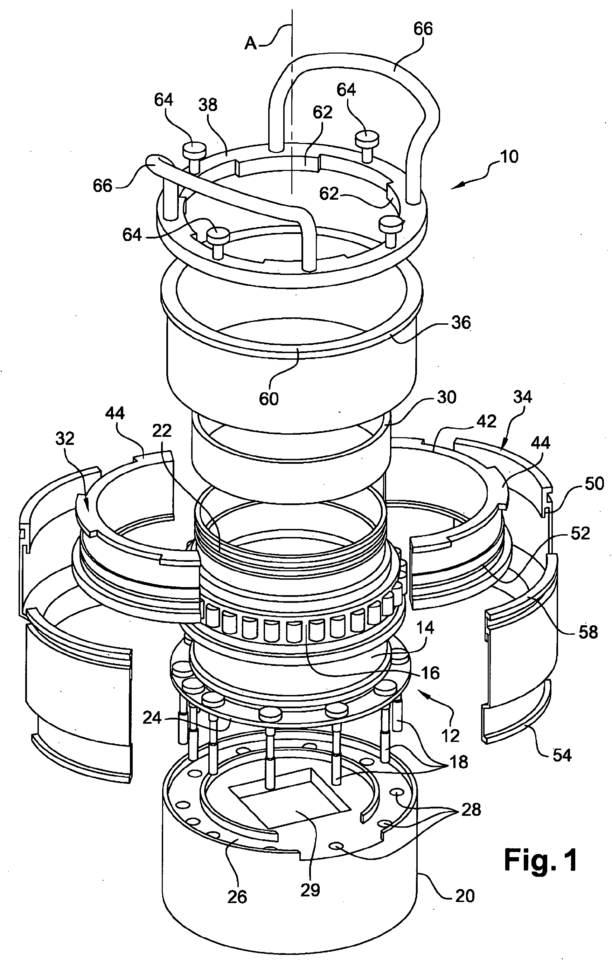

On se réfère d'abord à la figure 1 qui représente un outil 10 selon l'invention de montage d'un ensemble 12 comportant une bague intérieure de roulement 14, une cage de roulement 16 et des vis 18, sur un module mineur ou majeur d'arbre de turbomachine, cet outil 10 comprenant plusieurs pièces qui ont notamment pour fonction de protéger la bague 14 et la cage de roulement 16 lors du montage et qui sont assemblées sur un socle de support 20.

Dans la description qui suit, les termes « amont » et « aval » sont utilisés en référence à l'écoulement des gaz dans la turbomachine. En position de montage dans la turbomachine, la bague 14 comprend une extrémité amont située vers l'amont de la turbomachine et une extrémité aval située vers l'aval de la turbomachine. Les mêmes termes sont utilisés pour désigner des extrémités des pièces de l'outil. Autrement dit, une extrémité amont d'une pièce de l'outil sera située vers l'amont de la bague de roulement 14, et inversement.

La bague de roulement 14 a une forme sensiblement cylindrique d'axe longitudinal A. Les expressions « radialement interne » et « radialement externe » sont utilisées dans ce qui suit pour désigner des positions radiales par rapport à l'axe A.

La bague de roulement 14 comprend des léchettes annulaires externes 22 sur sa partie d'extrémité amont, un chemin de roulement sur sa partie médiane et une bride annulaire externe 24 à son extrémité aval. Les léchettes 22 sont destinées à être entourées et à coopérer avec une partie du stator de la turbomachine pour former un joint d'étanchéité à labyrinthe. La cage de roulement 16 est engagée sur le chemin de roulement de la bague 14 qui comprend des moyens de retenue axiale de cette cage dans ce chemin. La bride annulaire 24 comprend une rangée annulaire d'orifices axiaux de passage des vis 18, qui sont au nombre de onze dans l'exemple représenté. Les vis 18 sont en général engagées avec jeu dans ces orifices. L'ensemble 12 formé par la bague 14, la cage de roulement 16 et les vis 18 est destiné à être monté sur un arbre de turbine de la turbomachine, au moyen d'un seul outil 10.

Comme cela sera décrit dans ce qui suit, le socle de support 20 est conçu pour recevoir l'ensemble 12 en position verticale, c'est-à-dire que, lors de l'assemblage de l'outil, l'axe longitudinal A de la bague 14 et de l'outil 10 est orienté verticalement. Ce socle 20 a une forme cylindrique, son extrémité inférieure étant destinée à être en appui sur une surface plane et son extrémité supérieure comportant une gorge annulaire 26 de réception de la bride 24 de la bague 14. Cette gorge 26 est délimitée par deux rebords cylindriques coaxiaux qui forment des moyens de centrage de la bague 14 sur le socle, le fond de la gorge 26 comprenant une rangée annulaire d'orifices 28 de passage des vis 18 portées par la bride 14. Ces orifices 28 sont répartis sur le fond de la gorge 26 de la même façon que les orifices de la bride 24. Ils ont de préférence un diamètre légèrement supérieur à celui des vis 18 pour limiter leur déplacement. Le socle 20 comprend en outre un orifice central 29 à section carrée pour le passage de moyens de chauffage (non représentés) de la bague 14 par induction, ces moyens de chauffage étant destinés à traverser axialement la bague 14, l'outil 10 et le socle 20. Le socle de support est par exemple réalisé en alliage d'aluminium.

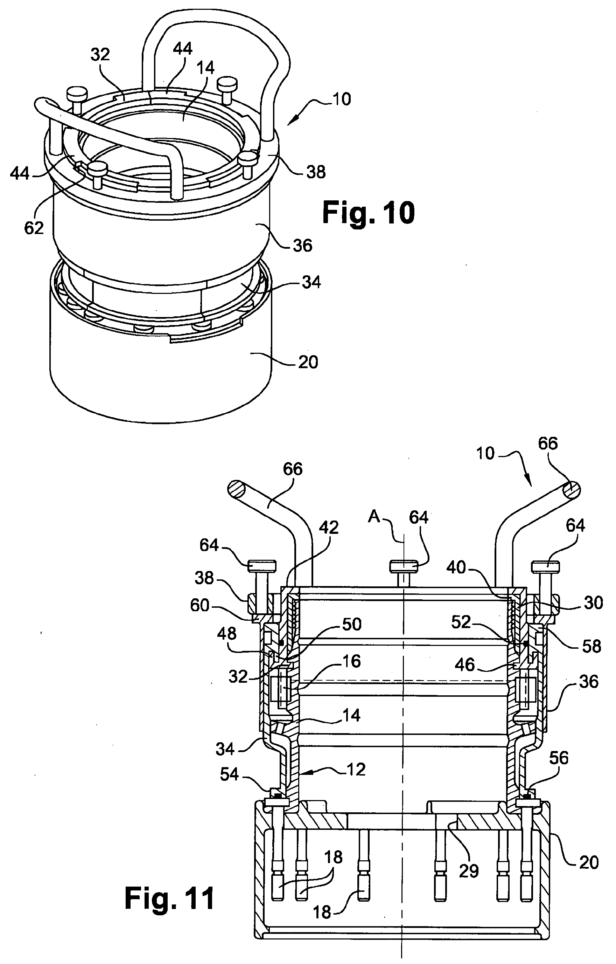

Dans l'exemple représenté, l'outil 10 comprend cinq pièces annulaires coaxiales entre elles et à la bague 14, au moins certaines de ces pièces s'étendant les unes autour des autres en position de montage, comme cela est visible en figure 11. L'outil 10 comprend un anneau de protection 30, une première enveloppe 32 sectorisée, une deuxième enveloppe 34 sectorisée, une couronne 36 et un anneau de verrouillage 38.

L'anneau de protection 30 est destiné à entourer la partie d'extrémité amont de la bague 14 et à protéger les léchettes 22 de la bague. Comme cela est visible en figure 11, cet anneau 30 comprend à son extrémité amont (ou supérieure) un rebord annulaire interne 40 qui est destiné à venir en appui axial sur l'extrémité amont de la bague 14. Cet anneau 30 est formé d'une seule pièce, par exemple en alliage d'aluminium.

La première enveloppe 32 a une forme générale cylindrique et est destinée à entourer l'anneau de protection 30. Elle comprend à son extrémité amont un rebord annulaire interne 42 qui s'étend en amont du rebord 40 de l'anneau 30 et qui assure la retenue axiale de l'anneau 30 sur la bague 14. Elle comprend en outre à son extrémité amont une rangée annulaire de dents de crabot 44 qui s'étendent radialement vers l'extérieur. Ces dents 44 sont au nombre de quatre et sont régulièrement réparties autour de l'axe A. Elles ont chacune une étendue angulaire de 45° et sont séparées les unes des autres par des espaces circonférentiels inter-dents ayant chacun une étendue angulaire de 45° autour de l'axe A. Ces dents 44 sont visibles en figure 1 mais pas en figure 11 car la coupe a été réalisée au niveau des espaces inter-dents précités.

L'enveloppe 32 comprend à son extrémité aval un rebord annulaire interne 46 qui est destiné à être logé dans une rainure annulaire externe de forme complémentaire de la bague 14, cette rainure étant située directement en amont de la cage de roulement 16. La première enveloppe 32 s'étend donc axialement sur la partie d'extrémité de la bague 14 située en amont de la cage de roulement. Comme cela est visible en figure 11, l'enveloppe 32 a un diamètre proche de celui de la cage de roulement 16.

L'enveloppe 32 comprend en outre à son extrémité aval un rebord cylindrique 48 orienté vers l'amont et qui forme une gouttière ou gorge annulaire de réception et d'accrochage d'un rebord cylindrique 50 orienté vers l'aval de la deuxième enveloppe 34. La première enveloppe 32 comprend en outre sur sa surface externe une gorge annulaire de réception d'un joint élastique 52 qui est destiné à coopérer avec une surface interne de la deuxième enveloppe 34. Ce joint 52 peut être monté prisonnier dans la gorge de l'enveloppe 32.

L'enveloppe 32 est sectorisée et formée de secteurs destinés à être disposés circonférentiellement bout à bout. Dans l'exemple représenté, l'enveloppe 32 comprend deux secteurs, chaque secteur comportant une dent de crabot 44 complète et deux demi-dents 44 situées au niveau des extrémités circonférentielles du secteur. Chaque secteur comprend en outre une moitié du joint 52 précité.

La deuxième enveloppe 34 a une forme générale cylindrique et est destinée à entourer notamment la cage de roulement 16 et la partie d'extrémité aval de la première enveloppe 32. L'enveloppe 34 entoure avec un jeu radial (par exemple de l'ordre de 1,5mm) la cage de roulement 16 pour éviter tout contact entre les roulements et la surface interne de l'enveloppe 34.

L'enveloppe 34 comprend à son extrémité aval (ou inférieure) un rebord annulaire externe 54 qui s'étend en amont des têtes des vis 18 et qui comprend sur sa face annulaire aval une gorge annulaire de réception d'une joint élastique 56 destiné à prendre appui axialement sur les têtes de vis 18. Ce joint 56 peut être monté prisonnier dans la gorge de l'enveloppe 34. L'enveloppe 34 peut prendre appui radialement vers l'intérieur sur une ou plusieurs surfaces annulaires de la bague 14. L'enveloppe 34 comprend à son extrémité amont un rebord annulaire externe 58 d'appui axial de la couronne 36.

L'enveloppe 34 est sectorisée et formée de secteurs destinés à être disposés circonférentiellement bout à bout. Dans l'exemple représenté, l'enveloppe 34 comprend cinq secteurs, chaque secteur comportant un secteur du joint 56 précité.

Les enveloppes 32 et 34 sont par exemple réalisées en acier.

La couronne 36 a une forme générale cylindrique et est destinée à entourer la partie d'extrémité amont de la deuxième enveloppe 34. Elle comprend à son extrémité amont (ou supérieure) une surépaisseur radiale formant des rebords annulaires respectivement interne et externe, le rebord interne 60 s'étendant en amont du rebord 58 de la deuxième enveloppe 34 et étant destiné à venir en appui axial sur ce rebord 58.

La couronne 36 est formée d'une seule pièce, par exemple en acier.

L'anneau de verrouillage 38 comprend une rangée annulaire de dents de crabot 62 qui s'étendent radialement vers l'intérieur. Ces dents 62 sont au nombre de quatre et sont régulièrement réparties autour de l'axe A. Elles ont chacune une étendue angulaire de 45° et sont séparées les unes des autres par des espaces circonférentiels inter-dents ayant chacun une étendue angulaire de 45° autour de l'axe A. Ces dents 62 sont visibles en figure 1 mais pas en figure 11 car la coupe a été réalisée au niveau des espaces inter-dents précités. Les dents 44 et 62 de l'enveloppe 32 et de l'anneau de verrouillage 38 sont destinées à coopérer entre elles pour le montage par crabotage de l'anneau 38 sur l'enveloppe 32.

L'anneau 38 est destiné à être monté sur la partie d'extrémité amont de l'enveloppe 32 et à être intercalé axialement entre les dents de crabot 44 de l'enveloppe 32, situées à l'amont, et l'extrémité amont de la couronne 36, située à l'aval.

L'anneau 38 comprend une rangée annulaire d'orifices traversants taraudés de vissage de vis 64 depuis l'amont, les extrémités libres de ces vis 64 étant destinées à prendre appui axialement sur l'extrémité amont de la couronne 36 pour la solliciter vers l'aval et serrer ainsi la deuxième enveloppe 34 entre la couronne et les têtes des vis 18.

L'anneau 38 comprend en outre des poignées 66 de préhension et de manipulation de l'outil 10, ces poignées étant ici au nombre de deux qui sont reliées à l'extrémité amont de l'anneau et sont diamétralement opposées par rapport à l'axe A.

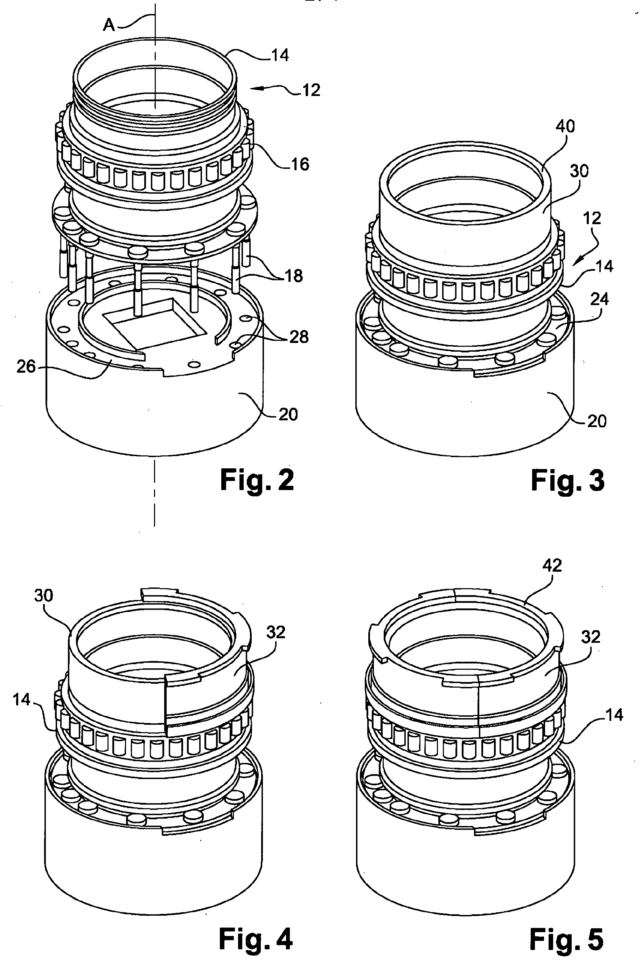

L'assemblage de l'outil 10 sur la bague de roulement 14 va maintenant être décrit en référence aux figures 2 à 10.

Une première étape du procédé d'assemblage consiste à poser l'ensemble 12 précité (bague 14, cage et galets de roulement 16 et vis 18) sur le socle de support 20. Pour cela, l'ensemble 12 est positionné coaxialement au dessus du socle 20 disposé horizontalement, de sorte que les vis 18 portées par la bride soient alignées avec les orifices 28 du socle 20 (figure 2). L'ensemble 12 est alors déplacé en translation le long de l'axe A vers le socle 20 jusqu'à ce que les vis 18 passent dans les orifices 28 du socle et que la bride 24 s'engage dans la gorge 26 du socle et prenne appui sur son fond.

L'anneau de protection 30 est ensuite engagé sur les léchettes de la bague 14 (figure 3) par translation de l'anneau du haut vers le bas, jusqu'à ce que son rebord 40 prenne appui sur l'extrémité amont ou supérieure de la bague.

Les secteurs de la première enveloppe 32 sont ensuite montés l'un après l'autre sur l'anneau de protection 30 et la bague 14 (figures 4 et 5). Pour cela, chaque secteur est positionné radialement à l'extérieur de l'anneau 30 et est déplacé en translation radiale vers l'anneau jusqu'à ce que son rebord 46 (non visibles aux figures 4 et 5) s'engage dans la rainure correspondante de la bague 14. L'enveloppe 32 retient axialement l'anneau 30 sur la bague par l'intermédiaire de son rebord 42, et est elle-même retenue axialement sur la bague par coopération de son rebord 46 avec la bague 14.

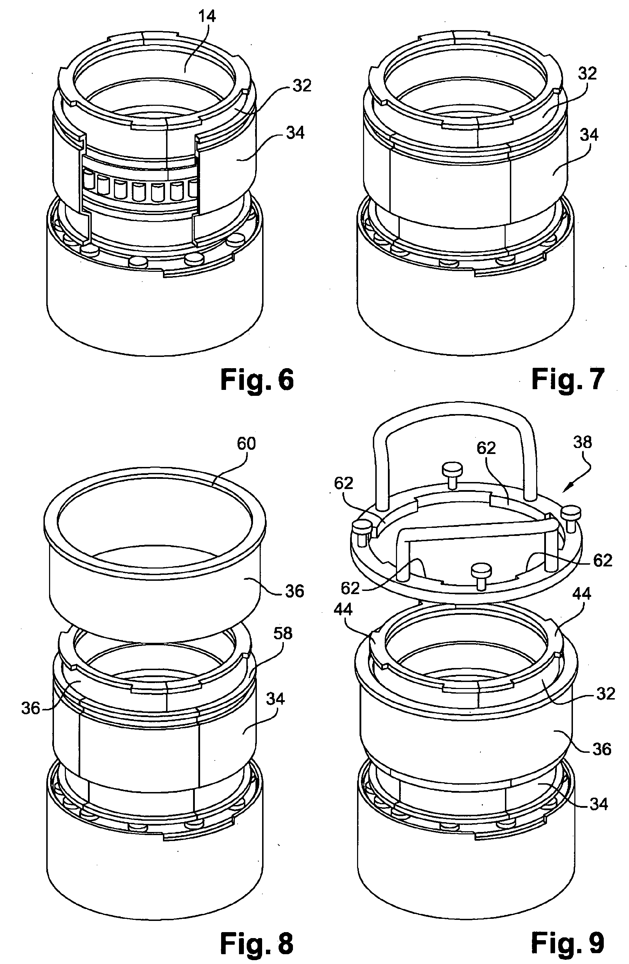

Les secteurs de la deuxième enveloppe 34 sont ensuite montés les uns après les autres sur la première enveloppe 32 et la bague 14 (figures 6 et 7). Pour cela, chaque secteur d'enveloppe 34 est disposé radialement à l'extérieur de la première enveloppe 32 de sorte que le rebord 50 de l'enveloppe 34 soit situé en amont du rebord 48 de l'enveloppe 32. L'enveloppe 34 est alors déplacée en translation radiale vers l'intérieur jusqu'à ce qu'elle vienne en appui radial sur l'enveloppe 32, puis est déplacée en translation axiale vers l'aval de façon à ce que son rebord 50 s'engage dans la gorge définie par le rebord 48 de l'enveloppe 32. Les longueurs ou dimensions axiales des rebords 48, 50 sont conçus pour qu'ils n'empêchent pas l'appui axial du joint 56 de l'enveloppe 34 sur les têtes de vis 18. Plus précisément, la longueur du rebord 50 de l'enveloppe 34 est inférieure à la profondeur ou dimension axiale de la gorge définie par le rebord 48 de l'enveloppe 32 pour qu'un jeu axial persiste au montage entre l'extrémité libre du rebord et le fond de la gorge. De même, la longueur du rebord 48 de l'enveloppe 32 est inférieure à la profondeur ou dimension axiale de la gorge définie par le rebord 50 de l'enveloppe 34 pour qu'un jeu axial persiste au montage entre l'extrémité libre de ce rebord et le fond de cette gorge. Ces jeux autorisent le serrage de l'enveloppe 34 entre la couronne 36 et les têtes de vis 18. Du fait des tolérances de fabrication, les surfaces amont ou supérieures des têtes de vis 18 ne sont pas toutes forcément coplanaires. L'outil 10 permet de palier à cet inconvénient au moyen du joint 56 qui est destiné à venir en appui sur les têtes de vis et à compenser les différences de positions axiales de ces têtes, le joint étant plus ou moins écrasé selon ces positions axiales qui varient sur quelques dixièmes de millimètre par exemple (IT=0,4 mm).

La couronne 36 est ensuite engagée sur la deuxième enveloppe 34 par translation axiale, du haut vers le bas (figure 8), jusqu'à ce que son rebord 60 prenne appui axialement sur le rebord 58 de la deuxième enveloppe 34.

L'anneau de verrouillage 38 est ensuite monté par crabotage sur la partie d'extrémité amont de la première enveloppe 32 (figures 9 et 10). Pour cela, l'anneau 38 est positionné coaxialement au dessus de la première enveloppe 32 de façon à ce que ses dents de crabot 62 soient alignées axialement avec les espaces inter-dents de l'enveloppe 32 (figure 9). L'anneau 38 est ensuite déplacé par translation axiale du haut vers le bas jusqu'à ce qu'il vienne en appui sur l'extrémité amont de la couronne 36. Les dents 62 de l'anneau 38 sont alors situées en aval des dents 44 de l'enveloppe 32. L'anneau est ensuite déplacé en rotation autour de l'axe A d'un angle de 45°, de façon à ce que les dents 44, 62 soient alignées axialement (figure 10). L'anneau 38 est alors retenu axialement vers l'amont par les dents 44 de l'enveloppe 32 qui s'étendent en amont des dents 62 de l'anneau.

Les vis 64 sont vissées, de préférence manuellement, de façon à ce que leurs extrémités libres prennent appui sur la couronne 36 et la sollicitent vers l'aval. Ceci va provoquer la mise en appui axial de l'anneau 38 sur les dents de crabot 44 de l'enveloppe 32 et d'autre part le serrage axial de l'enveloppe 34 entre la couronne 36 et les têtes de vis 18 qui seront empêchées de se déplacer lors de la manipulation de l'outil.

L'outil 10 permet de répartir les contre-efforts de plaquage des vis 18 dans la rainure de la bague qui reçoit le rebord 46 de la première enveloppe, sans risque de mater ou de rayer les surfaces de la rainure et de la cage de roulement.

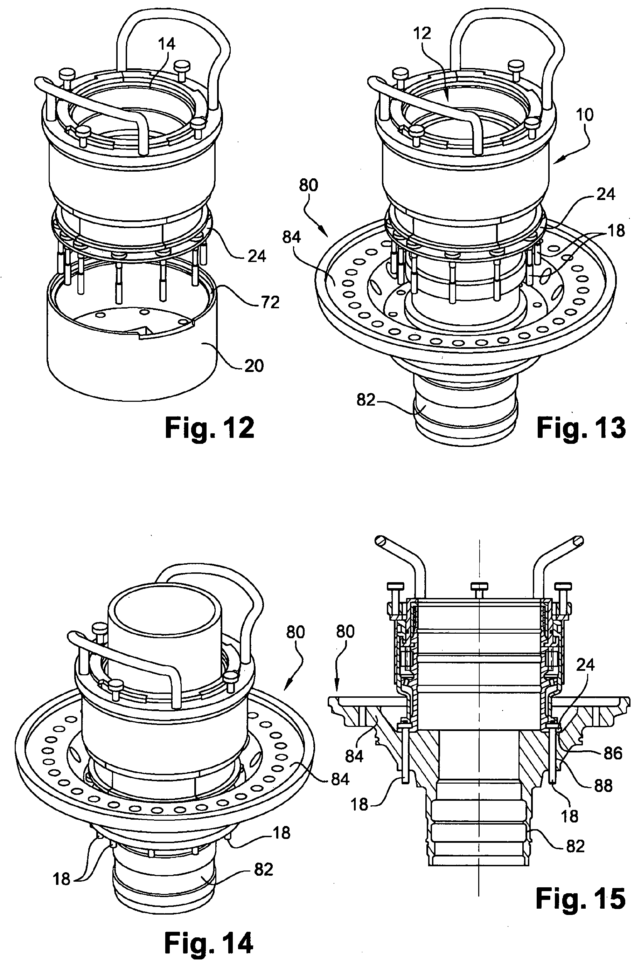

Avant son montage sur un arbre de turbomachine, l'ensemble 12 peut être chauffé. Le socle 20 représenté aux figures 1 à 11 comprend un orifice central de passage de moyens de chauffage par induction, comme décrit dans ce qui précède. Dans la variante de réalisation de la figure 12, ce même socle 20 (mais retourné) est utilisé pour chauffer l'ensemble 12, ce socle étant destiné à être introduit avec l'ensemble 12 et l'outil 10 dans un four. Ce socle 20 a une forme générale de bol cylindrique, la base du bol étant destinée à être en appui sur une surface plane et la périphérie supérieure du bol comportant une portée cylindrique 72 d'appui de la bride 24 de la bague 14.

On se réfère désormais aux figures 13 à 15 qui représentent des étapes de montage de l'ensemble 12 sur un module mineur 80 d'un arbre de turbine d'une turbomachine. Ce module mineur 80 peut être utilisé en atelier notamment. Il comprend une partie cylindrique 82 qui est reliée sensiblement en son milieu à une partie 84 sensiblement tronconique comportant une surface annulaire 86 orientée vers l'amont et sur laquelle débouche les extrémités amont d'orifices axiaux 88 de montage des vis 18 de l'ensemble 12.

Une première étape représentée en figure 13 consiste à positionner coaxialement l'outil 10 en amont du module (qui est en général disposé de sorte que son axe longitudinal soit orienté horizontalement, de sorte que les vis 18 soient alignées axialement avec les orifices 88 du module 80. L'outil 10 est ensuite déplacé par translation axiale vers le module jusqu'à ce que les vis 18 s'engagent dans les orifices 88 du module et que la bride 24 de la bague prenne appui sur la surface annulaire 86 du module (figures 14 et 15). Des écrous sont alors vissés sur les tiges filetées des vis 18 et sont serrés contre le module. L'outil 10 peut alors être désassemblé, comme cela sera décrit plus en détail dans ce qui suit.

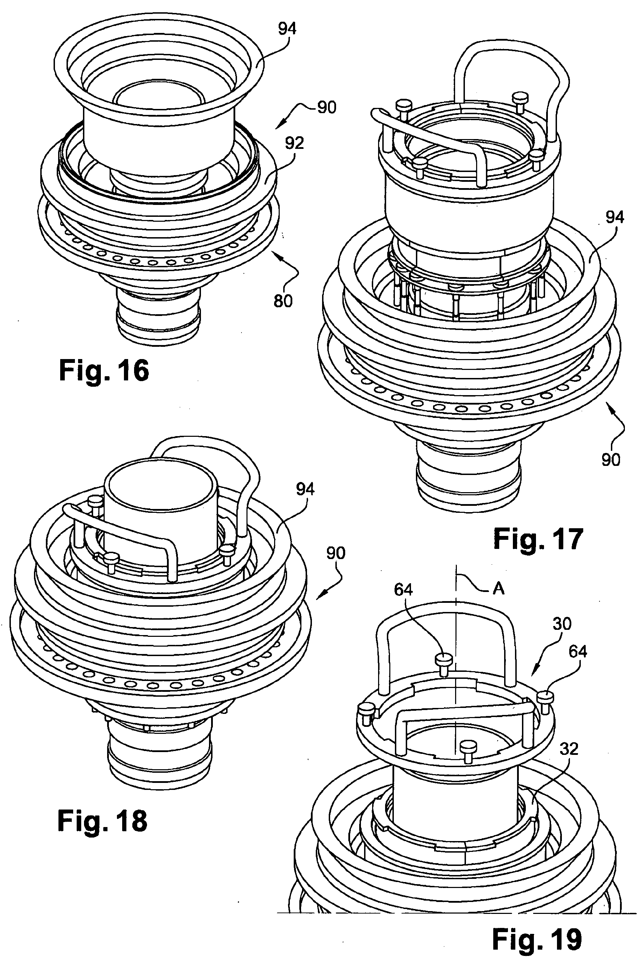

Les figures 16 à 18 représentent des étapes de montage de l'ensemble 12 sur un module majeur 90 d'un arbre de turbine d'une turbomachine, ce module majeur 80 représentant l'environnement réel de la turbomachine en condition de réparation. Le module majeur 80 comprend un module mineur tel que décrit dans ce qui précède, à l'extrémité amont duquel sont fixées des pièces annulaires 92. Ces pièces 92 comprennent notamment des léchettes annulaires internes (non visibles) qui doivent être protégées lors de l'opération de montage de l'ensemble 12 sur le module 90. Pour cela, un organe annulaire de protection 94 amovible est engagé dans les pièces 92, cet organe recouvrant les léchettes précitées mais ne gênant pas le montage de l'ensemble 12 sur le module 90.

Les étapes de montage de l'ensemble 12 sur le module majeur 90 au moyen de l'outil 10 (figures 17 et 18) sont les mêmes que celles décrites ci-dessus en référence aux figures 13 à 15.

Les figures 19 à 22 représentent des étapes de désassemblage ou de démontage de l'outil.

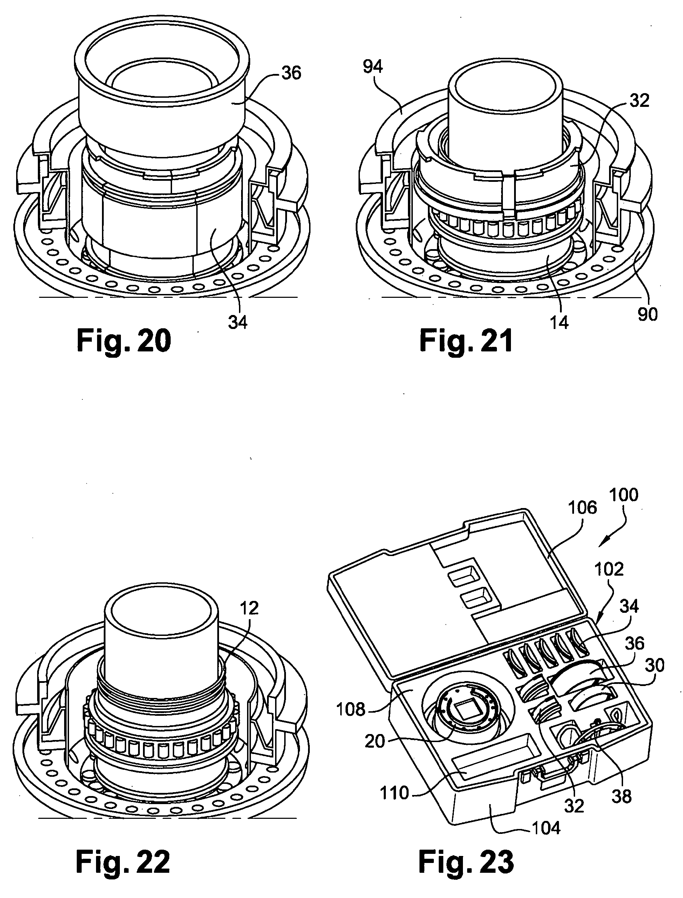

Dans la figure 19, les vis 64 de l'anneau de verrouillage 38 ont été desserrées et l'anneau a été déplacé en rotation de 45° autour de l'axe A, de façon à pouvoir le retirer de l'enveloppe 32 par translation axiale vers l'amont. La couronne 36 est ensuite retirée par translation axiale vers l'amont (figure 20) et les secteurs de deuxième enveloppe 34 sont retirés les uns après les autres. Les secteurs de première enveloppe 32 sont retirés les uns après les autres (figure 21) puis l'anneau de protection 30 est retiré par translation axiale vers l'amont. L'organe de protection 94 est alors retiré par translation axiale vers l'amont (figure 22). Au moins une partie des étapes de retrait des pièces de l'outil 10 et de l'organe 94 peut être réalisée au moyen d'un autre outil tel qu'une pince.

La figure 23 représente un kit 100 pour la mise en oeuvre des étapes précitées. Ce kit 100 comprend une mallette 102 de rangement et de stockage des différentes pièces de l'outil 10 décrit ci-dessus. La mallette 102 comprend une boîte 104 et un couvercle 106 de fermeture de la boîte, la boîte comportant un bloc de mousse 108 comportant des parties évidées formant des chambres de logement des différentes pièces de l'outil. Le bloc 108 définit une chambre de logement du socle de support 20, une chambre de logement pour chaque secteur de deuxième enveloppe 34, une chambre de logement pour chaque secteur de première enveloppe, une chambre de logement de la couronne, une chambre de logement de l'anneau de protection 30, une chambre de logement de l'anneau de verrouillage 38 et une chambre 110 de logement d'une pince (non représentée) pour le désassemblage de l'outil 10.

## Revendications

1. Outil (10) de montage d'un ensemble (12) comportant une bague intérieure (14) de roulement, une cage de roulement (16) équipée de galets et des vis de maintien (18) dans une turbomachine, la bague comportant un chemin de roulement des galets et à son extrémité aval une bride annulaire externe (24) comportant des orifices de passage des vis, **caractérisé en ce qu'**il comprend une première enveloppe cylindrique (32) sectorisée qui est destinée à recouvrir une partie d'extrémité amont de la bague et qui comprend des moyens (46) de retenue axiale sur la bague, une deuxième enveloppe cylindrique (34) sectorisée qui est destinée à recouvrir la cage de roulement et au moins une partie d'extrémité aval de la première enveloppe et à venir en appui axial sur les têtes de vis de la bride, une couronne cylindrique (36) qui est destinée à entourer au moins en partie la deuxième enveloppe et qui comprend des moyens (60) d'appui axial vers l'aval sur cette deuxième enveloppe, et un anneau de verrouillage (38) qui est monté sur une partie d'extrémité amont de la première enveloppe, entre la couronne et des moyens (44) de retenue axiale de cette partie d'extrémité amont, et qui comporte des moyens (64) d'appui axial vers l'aval sur la couronne et de serrage axial de la deuxième enveloppe entre les moyens d'appui de la couronne et les têtes de vis de la bride.

2. Outil (10) selon la revendication 1, **caractérisé en ce que** la première enveloppe (32) comprend à son extrémité amont des dents de crabot (44) destinées à coopérer avec des dents de crabot (62) complémentaires de l'anneau de verrouillage (38) pour, d'une part, autoriser le montage axial de l'anneau sur la partie d'extrémité amont de l'enveloppe et pour, d'autre part, retenir axialement l'anneau vers l'amont lorsque l'anneau est déplacé en rotation d'un angle prédéterminé par rapport à la première enveloppe.

3. Outil (10) selon la revendication 1 ou 2, **caractérisé en ce que** la première enveloppe (32) comprend au moins un joint annulaire (52) élastique destiné à coopérer avec la deuxième enveloppe (34), et/ou la deuxième enveloppe porte à son extrémité aval un joint annulaire élastique (56) destiné à venir en appui sur les têtes de vis (18).

4. Outil (10) selon l'une des revendications précédentes, **caractérisé en ce que**, la bague intérieure de roulement (14) comportant sur une partie d'extrémité amont des léchettes annulaires externes (22) d'un joint d'étanchéité à labyrinthe, l'outil comprend en outre un anneau de protection (30) destiné à entourer ces léchettes, cet anneau étant entouré par la première enveloppe (32) et étant bloqué axialement sur la bague par cette première enveloppe.

5. Outil (10) selon l'une des revendications précédentes, **caractérisé en ce que** la première enveloppe (32) comprend une gorge annulaire orientée vers l'amont de réception d'un rebord cylindrique (50) orienté vers l'aval de la deuxième enveloppe (34).

6. Outil (10) selon l'une des revendications précédentes, **caractérisé en ce que** la couronne (36) comprend à son extrémité amont un rebord annulaire interne (60) destiné à être intercalé entre l'extrémité amont (58) de la deuxième enveloppe (34) et l'anneau de verrouillage (38).

7. Outil (10) selon l'une des revendications précédentes, **caractérisé en ce que** l'anneau de verrouillage (38) comprend des orifices axiaux taraudés de montage de vis (64) dont les extrémités libres sont destinées à prendre appui axialement vers l'aval sur la couronne (36), le serrage des vis sollicitant la couronne vers l'aval et entraînant le serrage de la deuxième enveloppe (34) entre la couronne et les têtes de vis (18), l'anneau de verrouillage comprenant éventuellement des moyens de préhension de l'outil, tels que deux poignées (66) diamétralement opposées par rapport à l'axe longitudinal (A) de l'outil.

8. Outil (10) selon l'une des revendications précédentes, **caractérisé en ce qu'**il comprend un socle (20) de support de l'ensemble (12) précité et d'assemblage des différentes pièces de l'outil, ce socle comportant une surface annulaire qui est destinée à servir d'appui à la bride (24) de la bague (14) et qui comprend des orifices (28) de passage des vis (18) de cette bride.

9. Procédé de montage d'un ensemble (12) comportant une bague intérieure de roulement (14), une cage (16) et des galets de roulement et des vis (18) dans une turbomachine, au moyen d'un outil (10) selon l'une des revendications précédentes, **caractérisé en ce qu'**il comprend les étapes consistant à :
c) monter les secteurs de première enveloppe (32) sur la bague,
d) monter les secteurs de deuxième enveloppe (34) sur la bague et la première enveloppe,
e) engager la couronne (36) sur la deuxième enveloppe,
f) engager l'anneau de verrouillage (38) sur la première enveloppe, par exemple par une translation axiale vers la première enveloppe puis par une rotation d'un angle prédéterminé autour de l'axe longitudinal (A) de l'outil,
g) serrer axialement la deuxième enveloppe entre la couronne et les têtes de vis (18),
j) engager l'outil et la bague sur un arbre (80) de turbomachine par translation axiale depuis l'amont jusqu'à ce qu'il vienne en appui axial sur une surface annulaire (86) de cet arbre et que les vis (18) portées par la bride (24) de la bague passent à travers des orifices (88) de cette surface,
k) visser des écrous sur les extrémités libres des vis, et
l) démonter l'outil,
le procédé comprenant éventuellement une ou plusieurs des étapes suivantes :
- avant l'étape c) :
a) disposer l'ensemble précité verticalement sur le socle de support (20), de sorte que les vis de la bride traversent les orifices (28) du socle,
b) engager l'anneau de protection (30) sur les léchettes (22) de la bague, - entre les étapes g) et j) :
h) chauffer l'ensemble précité, soit par mise au four de la bague et de l'outil et son socle, soit par induction au moyen d'un élément qui traverse axialement l'outil et la bague et qui passe à travers un orifice central (29) du socle,
i) retirer l'outil de son socle

10. Kit (100) pour la mise en oeuvre du procédé selon la revendication 9, **caractérisé en ce qu'**il comprend une mallette (102) de rangement et de stockage des secteurs des première et deuxième enveloppes (32, 34), de la couronne (36), de l'anneau de verrouillage (38), et éventuellement de l'anneau de protection (30), du socle de support (20), et d'un outil de démontage individuel des secteurs de seconde enveloppe.

## Patentansprüche

1. Werkzeug (10) zur Montage einer Einheit (12), die einen inneren Lager ring (14), einen Lagerkäfig (16), der mit Rollen versehen ist, und Halteschrauben (18) in einer Strömungsmaschine umfasst, wobei der der Ring einen Rollenweg für die Rollen und an seinem stromabwärts gelegenen Ende einen äußeren ringförmigen Flansch (24) umfasst, der Öffnungen zur Durchführung von Schrauben umfasst, **dadurch gekennzeichnet, dass** es eine erste zylindrische, in Sektoren unterteilte Hülse (32), die dazu vorgesehen ist, einen Endabschnitt, der von dem Ring stromaufwärts gelegen ist, und der Mittel (46) zum axialen Festhalten auf dem Ring umfasst, eine zweite zylindrische, in Sektoren unterteilte Hülse (34), die vorgesehen ist, den Lagerkäfig und mindestens einen stromaufwärts gelegenen Endabschnitt der ersten Hülse abzudecken und axial an den Schraubenköpfen des Flansches anzuliegen, eine zylindrische Krone (36), die vorgesehen ist, zumindest teilweise die zweite Hülse zu umgeben, und die Mittel (60) zum axialen Anliegen in Richtung stromabwärts an der zweiten Hülse umfasst, und einen Verriegelungsring (38) umfasst, der an einem stromaufwärts gelegenen Endabschnitt der ersten Hülse zwischen der Krone und den Mitteln (44) zum axialen Halten des stromaufwärts gelegenen Endabschnitts angebracht ist, und der Mittel (64) zum axialen Anliegen in Richtung stromabwärts an der Krone und axialen Festziehen der zweiten Hülse zwischen den Mitteln zum Anliegen der Krone und den Schraubenköpfen des Flansches umfasst.

2. Werkzeug (10) nach Anspruch 1, **dadurch gekennzeichnet, dass** die erste Hülse (32) an ihrem stromaufwärts gelegenen Ende Kupplungszähne (44) umfasst, die dazu vorgesehen sind, mit komplementären Kupplungszähnen (62) des Verriegelungsrings (38) zusammenzuwirken, um einerseits, die axiale Montage des Rings auf dem stromaufwärts gelegenen Endabschnitt der Hülse zu ermöglichen, und um andererseits den Ring axial in Richtung stromaufwärts zu halten, wenn der Ring um einen vorbestimmten Winkel mit Bezug auf die erste Hülse gedreht wird.

3. Werkzeug (10) nach Anspruch 1 oder 2, **dadurch gekennzeichnet, dass** die erste Hülse (32) mindestens eine ringförmige, elastische Dichtung (52) umfasst, die dazu vorgesehen ist, mit der zweiten Hülse (34) zusammenzuwirken, und / oder dass die zweite Hülse an deren stromabwärts gelegenen Ende eine elastische ringförmige Dichtung (56) trägt, die dazu vorgesehen ist, an den Schraubenköpfen (18) anzuliegen.

4. Werkzeug (10) nach einem der vorhergehenden Ansprüche, **dadurch gekennzeichnet, dass** der innere Lagerring (14) an einem stromaufwärts gelegenen Endabschnitt äußere, ringförmige Lippen (22) einer Labyrinthdichtung trägt, wobei das Werkzeug ferner einen Schutzring (30) umfasst, der dazu vorgesehen ist, diese Lippen zu umgeben, wobei der Schutzring von der ersten Hülse umgeben ist (32) und axial auf dem Ring durch die erste Hülse blockiert wird.

5. Werkzeug (10) nach einem der vorhergehenden Ansprüche, **dadurch gekennzeichnet, dass** die erste Hülse (32) einen zylindrischen Hals umfasst, der in Richtung stromaufwärts von der Aufnahme eines zylindrischen Rands (50) ausgerichtet ist, der in Richtung stromabwärts von der zweiten Hülse (34) ausgerichtet ist.

6. Werkzeug (10) nach einem der vorhergehenden Ansprüche, **dadurch gekennzeichnet, dass** die Krone (36) an ihrem stromaufwärts gelegenen Ende einen inneren, ringförmigen Flansch (60) umfasst, der dazu vorgesehen ist, zwischen dem stromaufwärts gelegenen Ende (58) der zweiten Hülse (34) und dem Verriegelungsring (38) zu liegen.

7. Werkzeug (10) nach einem der vorhergehenden Ansprüche, **dadurch gekennzeichnet, dass** der Verriegelungsring (38) axiale, mit einem Gewinde versehene Öffnungen zur Montage von Schrauben (64) umfasst, deren freie Enden dazu vorgesehen sind, axial in Richtung stromabwärts an der Krone (36) anzuliegen, wobei das Festziehen der Schrauben die Krone in Richtung stromabwärts anspannt und das Festziehen der zweiten Hülse (34) zwischen der Krone und den Schraubenköpfen (18) hervorruft, wobei der Verriegelungsring optional Mittel zum Greifen des Werkzeugs wie zwei Handgriffe (66), die diametral mit Bezug auf die Längsachse (A) des Werkzeuges gegenüberliegen, umfasst.

8. Werkzeug (10) nach einem der vorhergehenden Ansprüche, **dadurch gekennzeichnet, dass** es einen Sockel (20) zum Stützen der vorher genannten Einheit (12) und zur Montage der verschiedenen Teile des Werkzeuges umfasst, wobei der Sockel eine ringförmige Fläche umfasst, die dazu vorgesehen ist, für den Flansch als Auflage (24) des Rings (14) zu dienen und die Öffnungen (28) für die Durchführung der Schrauben (18) des Flansches aufweist.

9. Verfahren zur Montage einer Einheit (12), die einen inneren Lagerring (14), einen Käfig (16), Laufrollen und Schrauben (18) in einer Strömungsmaschine umfasst, mittels eines Werkzeuges (10) nach einem der vorhergehenden Ansprüche, **dadurch gekennzeichnet, dass** es die Schritte umfasst, die bestehen in:
c) Montieren der Sektoren der ersten Hülse (32) an dem Ring,
d) Montieren der Sektoren der zweiten Hülse (34) an dem Ring und der ersten Hülse,
e) Eingreifen der Krone (36) in die zweite Hülse,
f) Eingreifen des Verriegelungsrings (38) in die erste Hülse, beispielsweise durch eine axiale Verschiebung in Richtung der ersten Hülse, dann durch eine Drehung um einen vorbestimmten Winkel um die Längsachse (A) des Werkzeuges,
g) axiales Festziehen der zweiten Hülse zwischen der Krone und den Schraubenköpfen (18),
j) Eingreifen des Werkzeugs und des Rings in eine Welle (80) der Turbomaschine durch eine axiale Verschiebung von Richtung stromaufwärts, bis er in axialer Richtung an einer ringförmigen Fläche (86) der Welle anliegt, und bis die Schrauben (18), die von dem Flansch (24) des Rings getragen werden, durch die Öffnungen (88) der Fläche laufen,
k) Schrauben der Muttern auf die freien Enden der Schrauben,
und
l) Demontieren des Werkzeuges,
wobei das Verfahren gegebenenfalls einen oder mehrere der folgenden Schritte umfasst:
- vor dem Schritt c):
a) Anbringen der zuvor genannten Einheit senkrecht auf dem Sockel zum Stützen (20), so dass die Schrauben des Flansches die Öffnungen (28) des Sockels durchlaufen,
b) Eingreifen des Schutzrings (30) in die Lippen (22) des Rings,
- zwischen den Schritten g) und j):
h) Erhitzen der zuvor genannten Einheit entweder durch Bringen des Rings und des Werkzeuges und seines Sockels in einen Ofen, oder durch Induktion mittels eines Elements, das durch das Werkzeug und den Ring läuft, und das durch eine zentrale Öffnung (29) des Sockels läuft,
i) Entfernen des Werkzeugs von seinem Sockel.

10. Kit (100) zur Durchführung des Verfahrens nach Anspruch 9, **dadurch gekennzeichnet, dass** es einen Koffer (102) für die Aufnahme und Lagerung der Sektoren der ersten und zweiten Hülsen (32, 34) der Krone (36) des Verriegelungsrings (38) und gegebenenfalls der Schutzrings (30), des Sockels des Träger (20) und eines Werkzeugs zur individuellen Demontage der Sektoren der zweiten Hülse umfasst.

## Claims

1. Tool (10) for mounting an assembly (12) comprising an inner bearing race (14), a bearing cage (16) equipped with rollers, and screws (18) for holding in a turbine engine, the race comprising a raceway for the rollers and, at its downstream end, an outer annular flange (24) comprising orifices for the screws to pass, **characterised in that** it comprises a first sectored cylindrical envelope (32) that is intended to cover an upstream end part of the race and comprises means (46) for axial holding on the race, a second sectored cylindrical envelope (34) that is intended to cover the bearing cage and at least one downstream end part of the first envelope and to come into axial abutment on the screw heads of the flange, a cylindrical ring (36) that is intended to at least partly surround the second envelope and comprises means (60) for downstream axial abutment on this second envelope, and a locking annulus (38) that is mounted on an upstream end part of the first envelope, between the ring and axial retaining means (44) of this upstream end part, and which comprises means (64) for downstream axial abutment on the ring and axial clamping of the second envelope between the bearing means of the ring and the screw heads of the flange.

2. Tool (10) according to claim 1, **characterised in that** the first envelope (32) comprises, at its upstream end, claw teeth (44) intended to engage with complementary claw teeth (62) on the locking annulus (38) so as firstly to allow axial mounting of the annulus on the upstream end part of the envelope and secondly to axially hold the annulus towards the upstream end when the annulus is rotated by a predetermined angle with respect to the first envelope.

3. Tool (10) according to claim 1 or claim 2, **characterised in that** the first envelope (32) comprises at least one resilient seal (52) intended to cooperate with the second envelope (34), and/or the second envelope carries at its downstream end a resilient annular seal (56) intended to come into abutment on the screw heads (18).

4. Tool (10) according to any of the preceding claims, **characterised in that**, the inner bearing race (14) comprising, on an upstream end part, outer annular wipers (22) of a labyrinth seal, the tool further comprises a protective annulus (30) intended to surround these wipers, this annulus being surrounded by the first envelope (32) and being locked axially on the race by this first envelope.

5. Tool (10) according to any of the preceding claims, **characterised in that** the first envelope (32) comprises an upstream-oriented annular groove for receiving a downstream-oriented cylindrical rim (50) of the second envelope (34).

6. Tool (10) according to any of the preceding claims, **characterised in that** the ring (36) comprises at its upstream end an inner annular rim (60) intended to be interposed between the upstream end (58) of the second envelope (34) and the locking annulus (38).

7. Tool (10) according to any of the preceding claims, **characterised in that** the locking annulus (38) comprises threaded axial orifices for mounting screws (64), the free ends of which are intended to bear axially towards the downstream end on the ring (36), the clamping of the screws urging the ring downstream and causing the clamping of the second envelope (34) between the ring and the screw heads (18), the locking annulus optionally comprising means for gripping the tool, such as two handles (66) diametrically opposed with respect to the longitudinal axis (A) of the tool.

8. Tool (10) according to any of the preceding claims, **characterised in that** it comprises a base (20) for supporting the aforementioned assembly (12) and for assembling the various parts of the tool, this base comprising an annular surface that is intended to serve as an abutment for the flange (24) of the race (14) and which comprises orifices (28) for the screws (18) of this flange to pass.

9. Method for mounting an assembly (12) comprising an inner bearing race (14), a cage (16) and bearing rollers and screws (18) for holding in a turbine engine, by means of a tool (10) according to any of the preceding claims, **characterised in that** it comprises the steps consisting of:
c) mounting the first-envelope sectors (32) on the race,
d) mounting the second-envelope sectors (34) on the race and the first envelope,
e) engaging the ring (36) on the second envelope,
f) engaging the locking annulus (38) on the first envelope, for example by an axial translation towards the first envelope and then a rotation by a predetermined angle about the longitudinal axis (a) of the tool,
g) axially clamping the second envelope between the ring and the screw heads (18),
j) engaging the tool and the race on a turbine-engine shaft (80) by axial translation from the upstream end until it comes into axial abutment on an annular surface (86) of this shaft and so that the screws (18) carried by the race flange (24) pass through the orifices (88) in this surface,
k) screwing nuts onto the free ends of the screws, and
l) removing the tool,
the method optionally comprising one or more of the following steps:
- before step c):
a) placing the aforementioned assembly vertically on the supporting base (20), so that the screws of the flange pass through the orifices (28) in the base,
b) engaging the protective annulus (30) on the wipers (22) of the race,
- between steps g) and j):
h) heating the aforementioned assembly, either by putting the race and the tool and its base in an oven, or by induction by means of an element that passes axially through the tool and the race and passes through a central orifice (29) in the base,
i) removing the tool from its base.

10. Kit (100) for implementing the method according to claim 9, **characterised in that** it comprises a case (102) for arranging and storing the sectors of the first and second envelopes (32, 34), the ring (36), the locking annulus (38) and optionally the protective annulus (30), the supporting base (20) and a tool for individual dismantling of the second-envelope sectors.
